(19) Europäisches Patentamt
European Patent Office
Office européen des brevets

(11) Veröffentlichungsnummer: **0 079 307**
**B1**

(12) **EUROPÄISCHE PATENTSCHRIFT**

(45) Veröffentlichungstag der Patentschrift: **21.08.85**

(51) Int. Cl.⁴: **B 01 D 13/04**, B 29 C 71/04

(21) Anmeldenummer: **82810461.2**

(22) Anmeldetag: **01.11.82**

(54) **Verwendung von lichtvernetzbaren Copolymeren zur Herstellung von semipermeablen Membranen.**

(30) Priorität: **06.11.81 CH 7109/81**

(43) Veröffentlichungstag der Anmeldung: **18.05.83 Patentblatt 83/20**

(45) Bekanntmachung des Hinweises auf die Patenterteilung: **21.08.85 Patentblatt 85/34**

(84) Benannte Vertragsstaaten: **CH DE FR GB LI NL**

(56) Entgegenhaltungen:
**EP - A - 0 001 233**
**EP - A - 0 004 287**
**EP - A - 0 039 662**
**DE - A - 2 626 769**
**DE - A - 3 007 445**
**DE - B - 1 964 547**
**DE - B - 2 834 716**
**GB - A - 1 327 990**

(73) Patentinhaber: **CIBA-GEIGY AG, Postfach, CH-4002 Basel (CH)**

(72) Erfinder: **Sinnreich, Joel, Dr., Karlstrasse 9, D-6140 Bensheim/Bergstrasse (DE)**
Erfinder: **Berger, Joseph, Dr., Sperrstrasse 40/18, D-4057 Basel (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



BUNDESDRUCKEREI BERLIN

**Beschreibung**

Die vorliegende Erfindung betrifft die Verwendung von lichtvernetzbaren Copolymeren auf Basis von äthylenisch ungesättigten Monomeren, wobei in der Polymerkette der lichtvernetzbaren Copolymeren seitenständig mindestens 2 Maleinimidgruppen enthalten sind, zur Herstellung von semipermeablen Membranen.

Es ist bekannt, semipermeable Membranen bei Trennungsverfahren, wie umgekehrte Osmose (auch Hyperfiltration genannt) und Ultrafiltration, zu verwenden. Ein wesentliches Merkmal dieser Trennverfahren mit Membranen ist die selektive Permeabilität der Membran, insbesondere das Rückhaltevermögen für den gelösten Stoff, und der Durchfluß des Lösungsmittels.

An Membranen aus Kunststoff, die zum Beispiel bei der Erzeugung von Trinkwasser aus Meerwasser oder Brackwasser, bei der Abwasserbehandlung, bei der Aufarbeitung von galvanischen Bädern, sowie in der Nahrungsmittelindustrie und in der pharmazeutischen Industrie Anwendung finden, werden hohe Anforderungen nicht nur bezüglich ihrer Trennwirksamkeit, sondern auch hinsichtlich ihrer mechanischen Festigkeit und chemischen Beständigkeit gestellt. Hauptsächlich werden Membranen Celluloseestern, Polyamiden oder Acrylnitrilpolymerisaten verwendet, die aber bezüglich ihrer Trennfähigkeit oder hinsichtlich ihrer Lösungsmittelbeständigkeit noch Mängel aufweisen. Es hat daher nicht an Versuchen gefehlt, diese Mängel durch Modifizierung der genannten Polymeren zu beheben. In der DE-A-2 906 334 wird beispielsweise vorgeschlagen, mit cyclischen $\beta$-Ketonsäuren, insbesondere mit Succinylobernsteinsäure, modifizierte Celluloseesterderivaten zur Herstellung von Membranen zu verwenden.

In der EP-A-1 233 werden semipermeablen Membranen aus Acrylnitrilpolymerisaten, wobei die Cokomponente ein äthylenisch ungesättigtes, ein oder zwei Disulfimidgruppierungen enthaltendes Monomer darstellt, offenbart. In der GB-A-1 327 990 werden zum Fraktionieren eines flüssigen Gemisches ebenfalls Copolymere auf Basis von Acrylnitril als Membranen eingesetzt.

Die DE-B-1 964 547 beschreibt ein Verfahren zur Herstellung eines durch Strahlung härtbaren Überzugsmaterials, wobei ein hydroxylgruppenhaltiges Copolymer aus hydroxylgruppenhaltigen Vinylmonomeren und Estern der Acryl- oder Methacrylsäure, das teilweise mit einem Dicarbonsäureanhydrid verestert ist und außerdem mit einem Epoxy-Vinylmonomeren modifiziert wird, eingesetzt wird.

Ferner offenbart die DE-B-2 834 716 ein Verfahren zur Herstellung von Membranen, bei dem Hydroxyoligomere auf Basis von Acrylaten im Gemisch mit auf Styrol basierenden Oligomeren radioaktiv oder mit Elektronenstrahlen bestrahlt werden.

Es wurde nun gefunden, daß man in einfacher Weise semipermeable Membranen mit einer guten Lösungsmittelbeständigkeit unter Beibehaltung von hohem Fluß und gutem Rückhaltevermögen erhält, wenn man zur Herstellung von Membranen lichtvernetzbaren Copolymere auf Basis von äthylenisch ungesättigten Monomeren einsetzt.

Gegenstand der vorliegenden Erfindung ist somit die Verwendung von lichtvernetzbaren Copolymeren auf Basis von äthylenisch ungesättigten Monomeren, wobei die lichtvernetzbaren Copolymeren ein Molekulargewicht von $10^3$ bis $10^7$ aufweisen und in der Polymerkette seitenständig mindestens 2 Maleinimidgruppen der Formel I

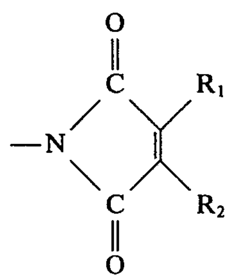

(I)

enthalten sind, worin $R_1$ und $R_2$ je ein Methyl sind oder $R_1$ und $R_2$ zusammen mit den Kohlenstoffatomen, mit denen sie verbunden sind, einen 5- oder 6-gliedrigen carbocyclischen, gegebenenfalls methylsubstituierten Ring bilden, und mindestens 10 Gew.-% der Monomeren, bezogen auf die Gesamtmengen der zur Herstellung der Copolymeren eingesetzten Comonomeren, saure und/oder basische Gruppen enthalten, zur Herstellung von semipermeablen Membranen.

Zur Herstellung der Membranen werden beispielsweise solche lichtvernetzbaren Copolymeren verwendet, welche die Maleinimidgruppen der Formel I in Molekülkettengliedern der Formeln

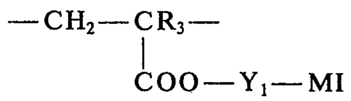

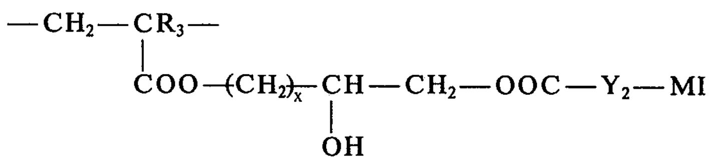

(x = 1 oder 2)

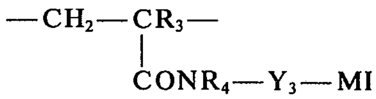

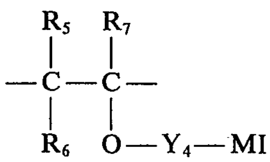

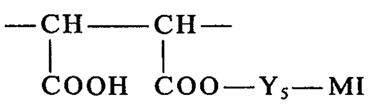

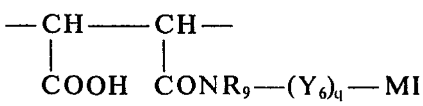

oder

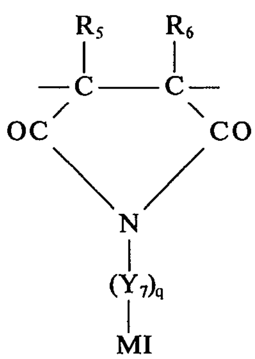

(q = 0 oder 1)

enthalten, worin

MI die Maleinimidgruppe der Formel I und
$Y_2$ ein aliphatisches, cycloaliphatisches, carbocyclisch-aromatisches, araliphatisches, heterocyclisch-aliphatisches oder heterocyclisch-aromatisches Brückenglied mit jeweils insgesamt höchstens 18 Kohlenstoffatomen ist,
$Y_1$ dieselbe Definition wie $Y_2$ hat oder die Gruppierung der Formel

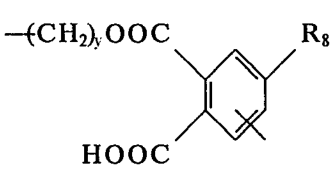

(y = 1 bis 4)

ist,

$Y_3$ dieselbe Definition wie $Y_2$ hat oder die Gruppierung -CO-$Y_2$ ist,

$Y_4$ dieselbe Definition wie $Y_2$ hat oder vorzugsweise ein aliphatischer oder carbocyclisch-aromatischer Rest ist,

$Y_5$ dieselbe Definition wie $Y_2$ hat oder die Gruppierung der Formel

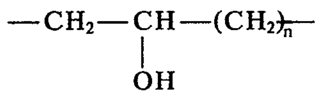

(n = 1 oder 2) bedeutet,

$Y_6$ dieselbe Definition wie $Y_2$ hat,

$Y_7$ dieselbe Definition wie $Y_2$ hat, wobei q vorzugsweise Null ist,

$R_3$ Wasserstoff oder Alkyl, vorzugsweise Methyl,

$R_4$ Wasserstoff oder Alkyl mit 1 bis 6 Kohlenstoffatomen,

$R_5$, $R_6$ und $R_7$ unabhängig voneinander Wasserstoff, Halogen, Cyano, Alkyl, Aryl, Aralkyl, vorzugsweise jedoch Wasserstoff sind,

$R_8$ Wasserstoff, $-COOH$ oder $-COO(CH_2)_zCH_3$ (z = 0 bis 18) ist, und

$R_9$ Wasserstoff oder Alkyl mit 1 bis 6 Kohlenstoffatomen bedeutet.

Die zur Herstellung der Membranen verwendeten lichtvernetzbaren Copolymeren sind aus der DE-A-2 626 769 bekannt und können nach den dort beschriebenen Methoden hergestellt werden, indem man entweder in eine bestehende Polymerkette mit reaktiven seitenständigen Gruppen, wie beispielsweise $-OH$, $-SH$, $-NH_2$, Dicarbonsäurehydrid- oder Epoxidgruppen, die lichtempfindlichen Maleinimidgruppen mittels einer Kondensations- bzw. Additionsreaktion einbaut oder eine Mischung aus Comonomeren, worin mindestens 10 Gew.-% der Monomeren die lichtempfindliche Maleinimidgruppe bereits enthalten, copolymerisiert. Solche maleinimidgruppenhaltige Monomere sind aus der DE-OS 2 626 795 bekannt.

Vorzugsweise bestehen die Membranen aus vernetzten Copolymeren, die unter Anwendung von lichtvernetzbaren Copolymeren, hergestellt aus

(1) einem (Meth)acrylsäureester-, (Meth)acrylsäureamid- oder Vinylätherderivat, das mindestens eine Maleinimidgruppe der Formel I enthält, oder einer Verbindung der Formel II

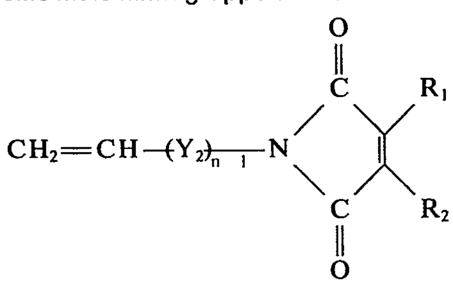

(II)

worin $R_1$, $R_2$, $Y_2$ und n die zuvor genannte Bedeutung haben und n vorzusweise für 1 steht,

(2) einem saure und/oder basische Gruppen aufweisenden, äthylenisch sich ungesättigten Comonomer in einer Menge von mindestens 10 Gew.-%, bezogen auf die Gesamtmenge der Comonomeren, und gegebenenfalls

(3) mindestens einem weiteren, äthylenisch ungesättigten Comonomer, das von den Comonomeren (1) und (2) verschieden ist,

erhalten werden.

Bevorzugte Comonomer (1) entsprechen den Formeln III bis V

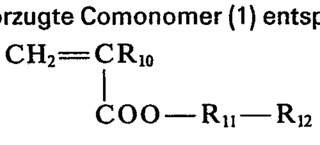

(III)

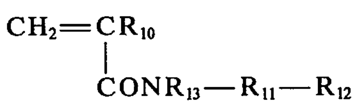

(IV)

oder

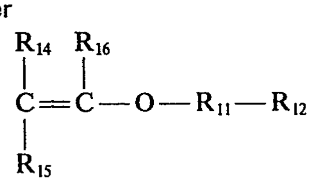

(V)

worin $R_{10}$ Wasserstoff oder Methyl, $R_{11}$ geradkettiges oder verzweigtes Alkylen mit 1 bis 12 Kohlenstoffatomen oder Cycloalkylen mit 5 oder 6 Kohlenstoffatomen, $R_{12}$ eine Maleinimidgruppierung der Formel

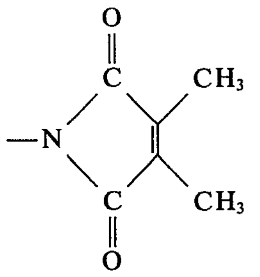

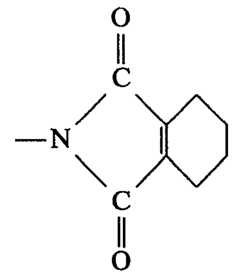

oder

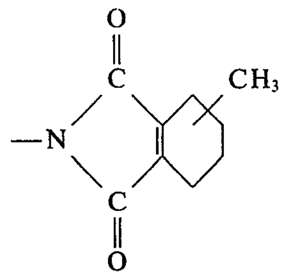

und $R_{13}$ Wasserstoff oder Alkyl mit 1 bis 6 Kohlenstoffatomen ist und $R_{14}$, $R_{15}$, und $R_{16}$ je Wasserstoff, Halogen, Cyano oder Alkyl mit 1 bis 6 Kohlenstoffatomen sind.

Die Comonomeren der Formeln III und V sind besonders bevorzugt, insbesondere die der Formel III, wie z. B. die Verbindung der Formel

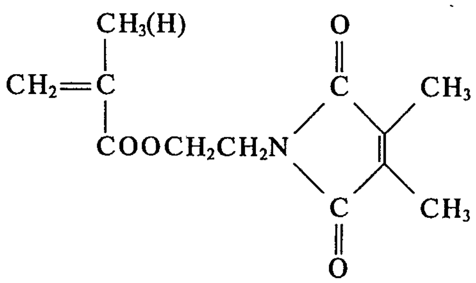

Der Gehalt an diesen Comonomeren im lichtvernetzbaren Copolymer bestimmt die Vernetzungsdichte des unter Lichteinwirkung entstehenden Netzwerkes. Ist er zu klein, so ist die Vernetzung und damit die mechanische Festigkeit der Membran unzureichend.

Außer den soeben beschriebenen Maleinimidgruppen enthaltenden Molekülkettengliedern, die 10 bis 90 Gew.-% der Copolymeren ausmachen können, weisen die Copolymeren maleinimidgruppenfreie Molekülkettenglieder auf, die saure und/oder basische Gruppen sowie gegebenenfalls zusätzlich weitere maleinimidgruppenfreie Kettenglieder enthalten.

Die sauren Kettenglieder können sich von den folgenden Comonomeren (2) ableiten: $\alpha,\beta$-ungesättigte Carbonsäuren, beispielsweise Acrylsäure, Methacrylsäure, Maleinsäure, Fumarsäure, Itaconsäure, Crotonsäure; sulfonsäuregruppenhaltige Monomere, beispielsweise Vinylsulfonsäure und deren Salze (z. B. Na- oder K-Salz), 2-Sulfoäthyl-methacrylat, Styrol-sulfonsäure oder carboxylgruppenhaltige Monomere, die sich aus der Umsetzung von cyclischen Säureanhydriden (1 Mol) mit Hydroxyäthyl(meth)acrylat (1 Mol) ergeben, beispielsweise Phthalsäure-mono-$\beta$-(meth)acryloxiäthylester.

Kettenglieder mit basischen Gruppen werden unter Verwendung bzw. Mitverwendung von vorzugsweise Dialkylaminogruppen oder Alkylarylaminogruppen tragenden Carbonsäurederivaten Carbonsäurederivaten $\alpha,\beta$-ungesättigter Carbonsäuren oder stickstoffheterocyclischen Verbindungen als Comonomere in das Copolymer eingeführt. Als basische Comonomeren kommen z. B. in Betracht: Comonomere aus der Reihe der Vinylpyridinverbindungen, wie 2-Vinylpyridin, 4-Vinylpyridin, basisch substituierte (Dialkylaminogruppen tragende) Acrylester oder Amide, wie beispielsweise Dimethylaminoäthyl(meth)acrylat, Diäthylaminoäthyl(meth)acrylat, Dimethylaminopropyl(meth)acrylat, Diäthylaminopropyl(meth)acrylat, Dimethylaminpropylmethacrylat oder Diäthylaminopropylmethacrylat.

Vorzugsweise bestehen die basischen Gruppen aus einem Vinylpyridin oder einem N,N-Dialkylamino- oder N,N-Alkylarylamino(meth)acrylsäurealkylester, insbesondere aus einem N,N-Dialkylamino(meth)acrylsäurealkylester.

Die gegebenenfalls bei der Herstellung der lichtvernetzbaren Copolymeren mitzuverwendenden, keine sauren oder alkalischen Gruppen aufweisenden Comonomeren (3) leiten sich beispielsweise von den folgenden Comonomeren ab:

Olefine, insbesondere Alkene, Vinylhalogenide, beispielsweise Vinylchlorid, Vinylbromid, Vinylfluorid; Vinylidene, beispielsweise Vinylidenchlorid; Nitrile $\alpha,\beta$-ungesättigter Säuren, beispielsweise (Meth)-acrylnitrid; Ester $\alpha,\beta$-ungesättigter Säuren, (Acryl)- und Methacrylsäure), beispielsweise Methylmethacrylat, Äthylacrylat, Propylacrylat, Butylacrylat, Octylacrylat, 2-Äthyl-hexylacrylat, Methylmethacrylat, Äthylmethacrylat, Isopropylmethacrylat, Butylmethacrylat, Glycidylacrylat, Glycidylmethacrylat, Chlormethylmethacrylat; $\alpha,\beta$-ungesättigte Carbonsäureamide und ihre Derivate, beispielsweise Acrylamid, Methacrylamid; aromatische Vinylverbindungen, beispielsweise Styrol, Methylstyrol, Vinyltoluol, $\alpha$-Chlorstyrol; Vinylketone, beispielweise Methylvinylketon; Vinylester, beispielsweise Vinylacetat; heterocyclische Vinylverbindungen, beispielsweise Vinylpyrrolidon, Vinylcarbazol oder ein Vinyläther.

Vorzugsweise enthalten die Copolymeren als Comonomere (3) ein Alken, Vinyl- oder Vinylidenhalogenid, (Meth)acrylnitril, Ester oder Amide einer $\alpha$-ungesättigten Säure, eine aromatische oder heterocyclische Vinylverbindung, ein Vinylester oder -äther oder ein Vinylketon, insbesondere einen (Meth)acrylsäurealkyl- oder -hydroxyalkylester, und vor allem einen (Meth)acrylsäurealkylester. Die lichtvernetzbaren Copolymeren können 0 bis 80° Gew.-% von wiederkehrenden Einheiten enthalten, die sich von den Comonomeren (3) ableiten.

Von den möglichen Copolymeren sind bevorzugt solche, die aus Comonomeren (2) mit freien Carboxylgruppen hergestellt sind, wie insbesondere $\alpha,\beta$-ungesättigte Säuren, wie Methacrylsäure, Acrylsäure, Maleinsäure (Maleinsäureanhydrid) und Phthalsäure-mono-$\beta$-methacryloxi-äthylester. Dabei kann der Gehalt an diesen Säuren im Polymeren zwischen 90 und 10 Gew.-% variieren, bevorzugt zwischen 50 und 15 Gew.-%.

Für die Herstellung der Membranen verwendet man insbesondere solche lichtvernetzbaren Copolymeren, die eine basische Gruppe enthalten, und wobei das Comonomer aus einem Vinylpyridin oder einem N,N-Dialkylamino- oder N,N-Alkylarylamino(meth)acrylsäurealkylester besteht. Und in einer bevorzugten Ausführungsform werden die in den basischen Gruppen enthaltenen tertiären N-Atome in bekannter Weise mittels Quaternierungsmittel, wie z. B. Dimethylsulfat, quaternisiert.

Membranen, die aus lichtvernetzbaren Copolymeren hergestellt werden, die sowohl saure als auch basische Gruppen aufweisen, stellen ebenfalls eine bevorzugte Ausführungsform dar.

Die lichtvernetzbaren Copolymeren können nach üblichen bekannten Verfahren gereinigt werden, beispielsweise durch Ausfällen in einem Nichtlösemittel für das Polymer und anschließendem Waschen und Trocknen.

Die Lichtempfindlichkeit der lichtvernetzbaren Copolymeren wird durch Sensibilisatoren ganz erheblich erhöht. Durch geeignete Wahl von Sensibilisatoren läßt sich die Empfindlichkeit auf das Licht diverser handelsüblicher Kopierlampen, wie z. B. Metall-Halogenlampen, maximal anpassen.

Als Sensibilisatoren sind insbesondere Triplettsensibilisatoren geeignet, bei deren Anwendung die Vernetzung durch Triplettenergietransfer des angeregten Sensibilisators auf den nicht angeregten Maleinsäureimidester der Formel I erfolgt; vergleiche dazu N. J. Turro, »Mol. Photochemistry«, W. A. Benjamin Inc. [1965], Seite 107. Die Bedingungen für eine wirksame Sensibilisierung sind dabei so, daß der Triplettensensibilisator ein Absorptionsmaximum aufweist, das eine praktisch ausreichende Lichtabsorption im Bereich von mehr als 300 nm erlaubt und daß der Triplettenergietransfer exotherm ist.

Speziell gut geeignet für Licht von 400—420 nm (Metall-Halogen) sind substituierte Thioxanthone, wie beispielsweise Alkylester des 6-Carboxy-2-methyl-thioxanthons. Die Sensibilisatoren werden bevorzugt in Mengen von 0,1—10 Gew.-%, bezogen auf das Gewicht des Copolymers eingesetzt. Es können auch Kombinationen von mehreren, verschiedenen Sensibilisatoren eingesetzt werden.

Zur Belichtung des vorliegenden Materials sind solche Lichtquellen geeignet, die im Bereich der Absorptionsbande des Sensibilisators eine wirksame Menge Strahlung abgeben. Da viele der genannten Sensibilisatoren zwischen 300 nm und 450 nm Absorption aufweisen, werden Lichtquellen bevorzugt, die in diesem Bereich einen hohen Strahlungsanteil emittieren. Es sind sowohl Punktlichtquellen als auch flächenförmige Strahler (Lampenteppiche) geeignet. Beispiele sind: Kohlelichtbogenlampen, Xenon-Lichtbogenlampen, Quecksilberdampflampen, gegebenenfalls mit Metall-Halogenid dotiert (Metall-Halogenlampen), Fluoreszenzlampen mit UV-Licht abstrahlenden Leuchtstoffen, Argonglühlampen, Elektronenblitzlampen und photographische Flutlichtlampen. Der Abstand zwischen Lampe und erfindungsgemäßem Bildmaterial kann je nach Anwendungszweck und Lampentyp bzw. -stärke variieren, z. B. zwischen 2 cm bis 150 cm. In Gewissen Fällen kann es vorteilhaft sein, mit sichtbarem Licht unter Verwendung eines Photoinitiators, der im sichtbaren Bereich des Spektrums empfindlich ist, zu belichten. In solchen Fällen sollte die Strahlungsquelle eine wirksame Menge sichtbaren Lichts abstrahlen.

Viele der vorstehend genannten Lichtquellen liefern die erforderliche Menge an sichtbarem Licht. Es ist auch möglich, die Polymeren ohne Sensibilisatoren zu vernetzen. Dazu sind Lichtquellen erforderlich, die im Bereich der Absorptionsbanden der Maleinimidgruppen der Formel (1) Licht emittieren, d. h. zwischen ca. 200—350 nm. Geeignet sind beispielsweise Quecksilberniederdruck- oder -mitteldruckdampflampen.

Die Herstellung der semipermeablen Membranen erfolgt in bekannter Weise, indem man die lichtvernetzbaren Copolymeren in Form einer organischen Lösung oder als Schmelze auf eine entsprechende Unterlage in dünner Schicht aufträgt, das gegebenenfalls verwendete Lösungsmittel verdampft und den erhaltenen Film bestrahlt. Die im Einzelfall günstigste Schichdicke der aufgetragenen Schicht hängt vom speziellen Verwendungszweck der Membranen ab. Bevorzugte Schichtdicken liegen im Bereich von 0,1 bis 100 $\mu$m vorzugsweise von 0,1 bis 50 $\mu$m.

Wie eingangs erwähnt, zeichnen sich die semipermeablen Membranen insbesondere durch eine verbesserte Lösungsmittelbeständigkeit aus; sie finden daher bei der Stofftrennung, wie speziell bei der Hyperfiltration oder Ultrafiltration, Anwendung.

Die nachfolgenden Beispiele erläutern die Erfindung näher.

## Herstellung der lichtvernetzbaren Copolymeren

### Beispiel A

In einem Sulfierkolben, ausgerüstet mit Rückflußkühler, Rührer, Stickstoffeinleitung und Thermometer, werden 80 Gewichtsteile 2-(Dimethylmaleinimido)-äthylmethacrylat und 20 Gewichtsteile Methacrylsäure als 15%ige Lösung in Methyläthylketon (MEK)-Methylcellosolve (MCS) (MEK : MCS = 1 : 1 Volumenteile) vorgelegt. Der Kolben wird mehrmals evakuiert und mit Stickstoff gespült, worauf der Inhalt auf 65° C gebracht und 0,2 Gew.-% Azo-bis-isobutyronitril (AIBN), berechnet auf die Summe der Monomeren, zugegeben wird. In 4stündigen Abständen werden nochmals 2 Portionen von je 0,2 Gew.-% AIBN zugegeben. Nach einer Reaktionsdauer von 24 Stunden wird das Copolymer in 15fachem Äther-Überschuß gefällt und der Niederschlag am Hochvakuum bei 40°C getrocknet. Das Copolymer wird in einer Ausbeute von 94% der Theorie erhalten und weist eine inhärente Viskosität ($\eta_{inh.}$) von 0,21 dl/g, gemessen in einem aus gleichen Teilen MEK und MCS bestehenden Lösungsmittelgemisch bei 25° C auf.

### Beispiel B

Analog Beispiel A werden 50 Gewichtsteile 2-(Dimethylmaleinimido)-äthylmethacrylat, 25 Gewichtsteile Methacrylsäure und 25 Gewichtsteile Butylmethacrylat copolymerisiert. Ausbeute: 68% der Theorie; $\eta_{inh.}$ = 0,22 dl/g.

### Beispiel C

80 Gewichtsteile 2-(Dimethylmaleinimido)-äthylmethacrylat, 20 Gewichtsteile N,N-Dimethylaminoäthylmethacrylat und 1 Gew.-% Dodecylmercaptan, bezogen auf die Summe der Monomeren, werden in einem Sulfierkolben gemäß Beispiel A zu einer 25%igen Lösung in Isopropanol gelöst. Die Lösung wird auf +10°C abgekühlt und mit äquimolaren Mengen Dimethylsulfat, bezogen auf die Menge an N,N-Dimethylaminoäthylmethacrylat, versehen. Daraufhin wird die Lösung mehrmals evakuiert und mit Stickstoff gespült, auf 80°C gebracht und mit 1,5 Gew.-% AIBN, berechnet auf die Summe der Monomeren, versehen. Nach 1,5 Stunden wird nochmals 1 Gew.-% AIBN zugegeben und die Reaktionslösung weitere 2 Stunden reagieren gelassen. Der Niederschlag wird abfiltriert und bei 40°C am Hochvakuum getrocknet. Das Copolymer wird in 98,8%iger Ausbeute erhalten und weist eine $\eta_{inh.}$ von 0,13 dl/g bei 25° C im MEK/MCS (1 : 1) auf.

### Beispiel 1

Eine Lösung von 1,42 g des Copolymers gemäß Beispiel A in 8,5 g Dioxan, enthaltend 0,075 g Thioxanthon-2-carbonsäuremethylester als Sensibilisator, wird gleichmäßig auf eine ebene Unterlage aufgetragen, über Nacht bei Raumtemperatur getrocknet und dann mit einer 2 kW Mitteldruckquecksilberlampe während 2 Stunden bestrahlt, wobei ein 12,4 µm dicker Film erhalten wird.

Dieser Film wird als Membran in einem Hyperfiltrationstest eingesetzt. Mit reinem Wasser erhält man bei einem Druck von 100 bar einen Wasserdurchfluß von 9,8 $l/m^2d$ und bei Verwendung einer 0,1 n NaCl-Lösung unter den gleichen Bedingungen einen Wasserdurchfluß von 4,8 $l/m^2d$ (1 = Liter des permeierten Volumens, m = Membranfläche und d = Tag), wobei das Salzrückhaltevermögen 43,3% beträgt. Die Membran ist wasserbeständig und unlöslich in Aceton, Chloroforn, Tetrahydrofuran und Dimethylsulfoxid.

### Beispiel 2

Eine Lösung von 1,4 g des Copolymers gemäß Beispiel B in 8,5 g Dioxan, enthaltend 0,075 g Thioxanthon-2-carbonsäuremethylester als Sensibilisator, wird auf eine ebene Unterlage gegossen, über Nacht vom Lösungsmittel durch Verdampfen bei Raumtemperatur befreit und anschließend mit einer 2 kW Mitteldruckquecksilberlampe während 0,5 Stunden bestrahlt, wobei ein 25 µm dicker, beständiger Film erhalten wird, der als Membran eingesetzt wird. Der gemäß Beispiel 1 durchgeführte Hyperfiltrationstest ergibt bei Verwendung von reinem Wasser einen Wasserdurchfluß von 1,6 $l/m^2d$ und bei Einsatz einer 0,1 n NaCl-Lösung einen Wasserdurchfluß von 2,0 $l/m^2d$ mit einem Salzrückhaltevermögen von 63,4%.

Die Membran ist wasserbeständig und unlöslich in Aceton, Chloroform, Tetrahydrofuran und Dimethylsulfoxid.

Beispiel 3

1,84 g des Copolymers gemäß Beispiel C werden in 9 ml eines aus gleichen Teilen Methyläthylketon und Äthylenglykolmonomethylester bestehenden Lösungsmittelgemisches, enthaltend 0,16 g Thioxanthon-2-carbonsäuremethylester als Sensibilisator, gelöst und zu einer 0,1 mm dicken Schicht auf eine ebene Unterlage aufgetragen. Bei Raumtemperatur wird das Lösungsmittel während 45 Minuten verdampfen gelassen und danach wie in Beispiel 1 während 15 Minuten bestrahlt. Der erhaltene 20 µm dicke Film wird als Membran in einem Hyperfiltrationstest eingesetzt. Unter den in Beispiel 1 angegebenen Bedingungen erhält man mit reinem Wasser einen Wasserdurchfluß von 175,4 $l/m^2d$ und bei Verwendung einer 0,1 n NaCl-Lösung einen Wasserdurchfluß von 157,2 $l/m^2d$, wobei das Salzrückhaltevermögen 93,9% beträgt.

Die Membran ist wasserbeständig und unlöslich in Aceton, Chloroform, Tetrahydrofuran und Dimethylsulfoxid.

**Patentansprüche**

1. Verwendung von lichtvernetzbaren Copolymeren auf Basis von äthylenisch ungesättigten Monomeren, wobei die lichtvernetzbaren Copolymeren ein Molekulargewicht von $10^3$ bis $10^7$ aufweisen und in der Polymerkette seitenständig mindestens 2 Maleinimidgruppen der Formel I

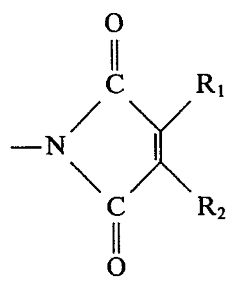

(I)

enthalten sind, worin $R_1$ und $R_2$ je ein Methyl sind oder $R_1$ und $R_2$ zusammen mit den Kohlenstoffatomen, mit denen sie verbunden sind, einen 5- oder 6gliedrigen carbocyclischen, gegebenenfalls methylsubstituierten Ring bilden, und mindestens 10 Gew.-% der Monomeren, bezogen auf die Gesamtmenge der zur Herstellung der Copolymeren eingesetzten Comonomeren, saure und/oder basische Gruppen enthalten, zur Herstellung von semipermeablen Membranen.

2. Verwendung gemäß Anspruch 1, dadurch gekennzeichnet, daß das lichtvernetzbare Copolymer hergestellt wurde aus

(1) einem (Meth)acrylsäureester-, (Meth)acrylsäureamid- oder Vinylätherderivat, das mindestens eine Maleinimidgruppe der Formel I enthält, oder eine Verbindung der Formel II

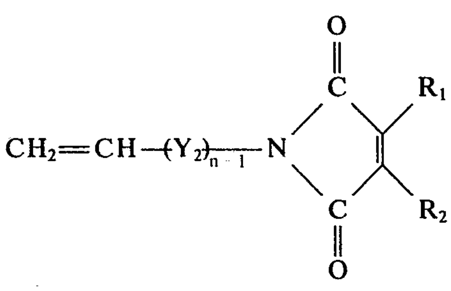

(II)

worin $R_1$ und $R_2$ die gleiche Bedeutung wie in Formel I haben,
$Y_2$ ein aliphatisches, cycloaliphatisches, carbocyclisch-aromatisches, araliphatisches, heterocyclisch-aliphatisches oder heterocyclisch-aromatisches Brückenglied mit jeweils insgesamt höchstens 18 Kohlenstoffatomen ist, und n für 1 oder 2 steht,

(2) einem saure und/oder basische Gruppen aufweisenden, äthylenisch ungesättigten Comonomer in einer Menge von mindestens 10 Gew.-%, bezogen auf die Gesamtmenge der Comonomeren, und gegebenenfalls

(3) mindestens einem weiteren, äthylenisch ungesättigten Comonomer, das von den Comonomeren (1) und (2) verschieden ist.

3. Verwendung gemäß Anspruch 2, dadurch gekennzeichnet, daß das lichtvernetzbare Copolymer aus 10 bis 90 Gew.-% der Komponente (1), 90 bis 10 Gew.-% der Komponente (2) und 0 bis 80 Gew.-% der Komponente (3) hergestellt worden ist.

4. Verwendung gemäß Anspruch 2, dadurch gekennzeichnet, daß das Comonomer (1) in dem lichtvernetzbaren Copolymer der Formeln

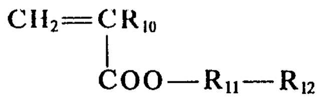

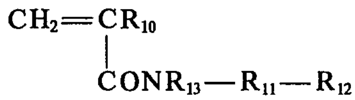

oder

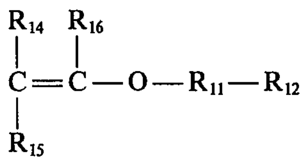

entspricht, worin $R_{10}$ Wasserstoff oder Methyl, $R_{11}$ geradkettiges oder verzweigtes Alkylen mit 1 bis 12 Kohlenstoffatomen oder Cycloalkylen mit 5 oder 6 Kohlenstoffatomen, $R_{12}$ eine Maleinimidgruppe der Formel

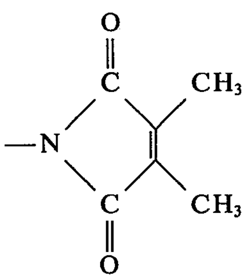

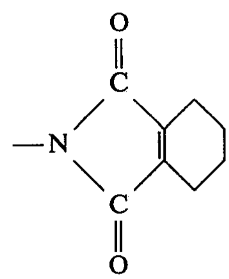

oder

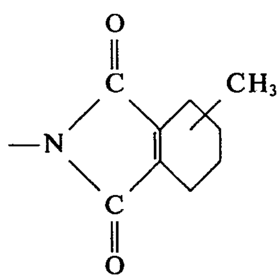

und $R_{13}$ Wasserstoff oder Alkyl mit 1 bis 6 Kohlenstoffatomen ist und $R_{14}$, $R_{15}$ und $R_{16}$ je Wasserstoff, Halogen, Cyano oder Alkyl mit 1 bis 6 Kohlenstoffatomen sind.

5. Verwendung gemäß Anspruch 2, dadurch gekennzeichnet, daß das Comonomer (2) in dem lichtvernetzbaren Copolmer aus Acrylsäure, Methacrylsäure, Crotonsäure, Maleinsäure, Fumarsäure, Itaconsäure, Vinylsulfonsäure, Styrolsulfonsäure oder einem Phthalsäure(meth)acrylhalbester besteht.

6. Verwendung gemäß Anspruch 2, dadurch gekennzeichnet, daß das Comonomer (2) in dem lichtvernetzbaren Copolymer aus einem Vinylpyridin oder einem N,N-Dialkylamino- oder N,N-Alkylarylamino(meth)acrylsäurealkylester besteht.

7. Verwendung gemäß Anspruch 2, dadurch gekennzeichnet, daß das Comonomer (2) saure oder basische Gruppen enthält.

8. Verwendung gemäß Anspruch 2, dadurch gekennzeichnet, daß das Comonomer (3) in dem lichtvernetzbaren Copolymer ein Alken, Vinyl- oder Vinylidenhalogenid, (Meth)acrylnitril, Ester oder Amide einer $\alpha$-ungesättigten Säure, eine aromatische oder heterocyclische Vinylverbindung, ein Vinylester oder -äther oder ein Vinylketon ist.

9. Verwendung gemäß Anspruch 2, dadurch gekennzeichnet, daß das Comonomer (3) in dem lichtvernetzbaren Copolymer ein (Meth)acrylsäurealkyl- oder -hydroxyalkylester ist.

10. Verwendung gemäß Anspruch 1, dadurch gekennzeichnet, daß das Comonomeren in dem lichtvernetzbaren Copolymer aus 2-(N-Dimethylmaleinimid)-äthylmethacrylat und N,N-Dimethylaminoäthylmethacrylat, quaternisiert mit bis zu äquimolaren Mengen Dimethylsulfat, bestehen.

## Claims

1. Use of photocrosslinkable copolymers based on ethylenically unsaturated monomers, said photocrosslinkable copolymers having a molecular weight of $10^3$ to $10^7$ and containing in the side groups of the polymer chain at least 2 maleimide groups of the formula I

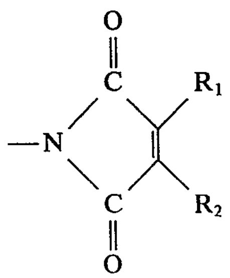

(I)

wherein each of $R_1$ and $R_2$ is methyl or $R_1$ and $R_2$, together with the carbon atom to which they are attached, form a 5-or 6-membered carboycIic ring which may be substituted by methyl, and with at least 10% by weight of said monomers, based on the total amount of the comonomers use for obtaining the copolymers, containing acid and/or basic groups, for the preparation of a semipermeable membrane.

2. Use of a photocrosslinkable copolymer according to claim 1, which has been prepared from

(1) a (meth)acrylate, a (meth)acrylamide or a vinyl ether derivative which contains at least one maleimide group of the formula I, or from a compound of the formula II

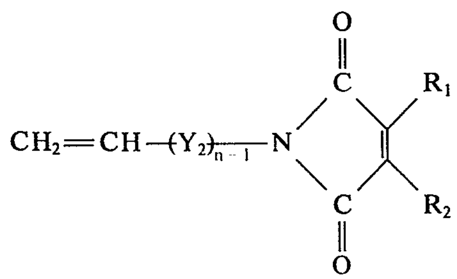

(II)

wherein $R_1$ and $R_2$ are as defined for formula I and $Y_2$ is an aliphatic, cycloaliphatic, carbocyclic-aromatic, araliphatic, heterocyclic-aliphatic or heterocyclic-aromatic bridge member, each containing altogether at most 18 carbon atoms, and n is or 2,

(2) at least 10% by weight, based on the total amount of the comonomers, of an ethylenically unsaturated comonomer containing acid and/or basic groups, and optionally

(3) at least one further ethylenically unsaturated comonomer which differs from the comonomers (1) and (2).

3. Use of a photocrosslinkable copolymer according to claim 2, which has been prepared from 10 to 90% by weight of component (1), 90 to 10% by weight of component (2) and 0 to 80% by weight of component (3).

4. Use according to claim 2, wherein the comonomer (1) in the photocrosslinkable copolymer has the formula

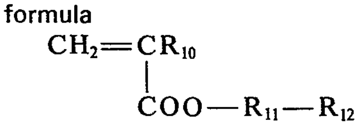

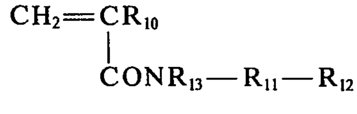

or

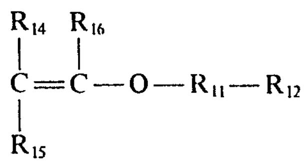

wherein $R_{10}$ is hydrogen or methyl, $R_{11}$ is straight chain or branched alkylene of 1 to 12 carbon atoms or

cycloalkylene of 5 or 6 carbon atoms, $R_{12}$ is a maleimide grouping of the formula

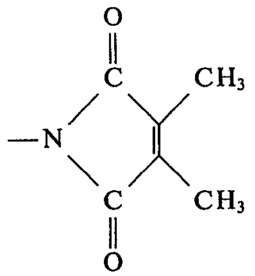

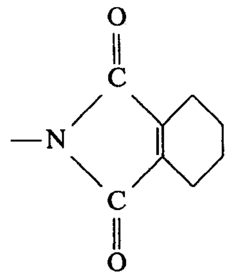

or

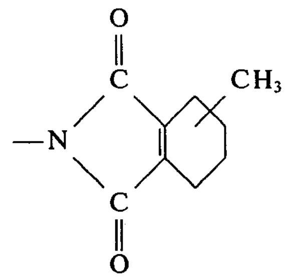

and $R_{13}$ is hydrogen or alkyl of 1 to 6 carbon atoms, and each of $R_{14}$, $R_{15}$ and $R_{16}$ is hydrogen, halogen, cyano or alkyl of 1 to 6 carbon atoms.

5. Use according to claim 2, wherein the comonomer (2) in the photocrosslinkable copolymer consists of acrylic acid, methacrylic acid, crotonic acid, maleic acid, fumaric acid, itaconic acid, vinylsulfonic acid, styrenesulfonic acid or a (meth)acrylic hemiester of phthalic acid.

6. Use according to claim 2, wherein the comonomer (2) in the photocrosslinkable copolymer consists of a vinylpyridine or an alkyl ester of N,N-dialkylamino- or N,N-alkyl-arylamino(meth)acrylic acid.

7. Use according to claim 2, wherein the comonomer (2) contains acid or basic groups.

8. Use according to claim 2, wherein the comonomer (3) in the photocrosslinkable copolymer is an alkene, a vinyl or vinylidene halide, a (meth)acrylonitrile, an ester or amide of an $\alpha$-unsaturated acid, an aromatic or heterocyclic vinyl compound, a vinyl ester or ether or a vinyl ketone.

9. Use according to claim 2, wherein the comonomer (3) in the photocrosslinkable copolymer is an alkyl or hydroxyalkyl (meth)acrylate.

10. Use according to claim 2, wherein the comonomer (2) in the photocrosslinkable copolymer consists of a 2-(N-dimethylmaleimido)ethyl methacrylate and N,N-dimethylaminoethyl methacrylate, quaternised with up to equimolar amounts of dimethyl sulfate.

**Revendications**

1. Utilisation de copolymères photoréticulables à base de monomères éthyléniquement insaturés pour la fabrication de membranes semi-perméables, moyennant quoi les copolymères photoréticulables présentent un poids moléculaire de $10^3$ à $10^7$ et la chaîne de polymère renferme au moins 2 groupes maléimide latéraux de formule I

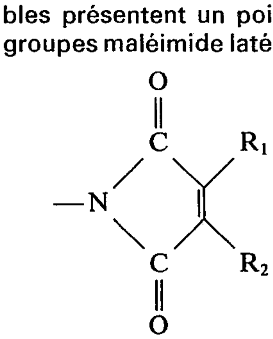

(I)

dans laquelle $R_1$ et $R_2$ sont chacun un méthyle ou $R_1$ et $R_2$ forment, avec les atomes de carbone auxquels ils sont reliés, un noyau carbocyclique à 5 ou 6 chaînons, éventuellement méthyl substitué, et au moins 10% en poids des monomères, rapportés à la quantité totale des comonomères mis en oeuvre pour la préparation des copolymères, contiennent des groupes acides et/ou basiques.

2. Utilisation selon la revendication 1, caractérisée en ce que le copolymère photoréticulable a été préparé à partir

1) d'un dérivé d'ester méthacrylique ou acrylique, de méthacrylamide ou d'acrylamide ou d'éther vinylique renfermant au moins un groupe maléimide de formula I ou d'un composé de formule II

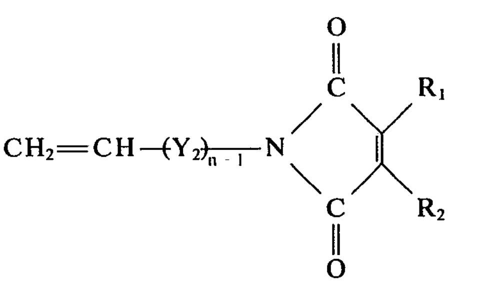

(II)

dans laquelle $R_1$ et $R_2$ ont la même signification que dans la formule I,
$Y_2$ est un élément de pontage aliphatique, cycloaliphatique, carbocyclo-aromatique, araliphatique, hétérocyclo-aliphatique ou hétérocyclo-aromatique avec chaque fois un total de 18 atomes de carbone au maximum et n est 1 ou 2,

2) d'un comonomère éthyléniquement insaturé porteur de groupes acides at/ou basiques à raison d'au moins 10% en poids par rapport à la quantité totale des comonomères et éventuellement

3) d'au moins un autre comonomère éthyléniquement insaturé qui est différent des comonomères (1) et (2).

3. Utilisation selon la revendication 2, caractérisée en ce que le copolymère photoréticulable a été préparé à partir de 10 à 90% en poids du constituant (1), de 90 à 10% en poids du constituant (2) et de 0 à 80% en poids du constituant (3).

4. Utilisation selon la revendication 2, caractérisée en ce que le comonomère (1) dans le copolymère photoréticulable répond aux formules

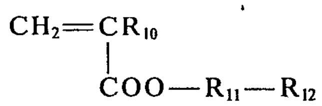

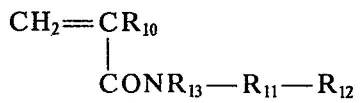

ou

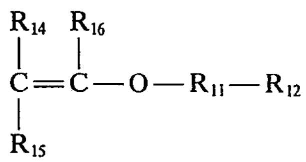

dans lesquelles $R_{10}$ est l'hydrogène ou un méthyle, $R_{11}$ est un alkylène droit ou ramifié avec 1 à 12 atomes de carbone ou un cycloalkylène avec 5 ou 6 atomes de carbone, $R_{12}$ est un groupe maléimide de formules

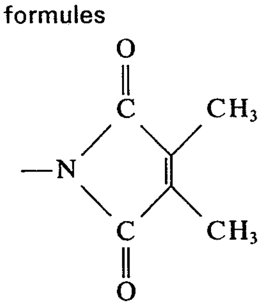

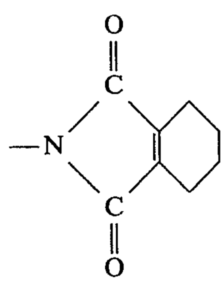

ou

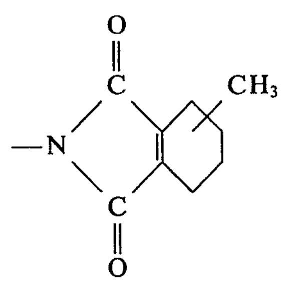

$R_{13}$ est l'hydrogène ou un alkyle avec 1 à 6 atomes de carbone et $R_{14}$, $R_{15}$ et $R_{16}$ sont chacun l'hydrogène, un halogène, un cyano ou un alkyle avec 1 à 6 atomes de carbone.

5. Utilisation selon la revendication 2, caractérisée en ce que le comonomère (2) dans le copolymère photoréticulable est constitué par de l'acide acrylique, de l'acide méthacrylique, de l'acide crotonique, de l'acide maléique, de l'acide fumarique, de l'acide itaconique, de l'acide vinylsulfonique, de l'acide styrènesulfonique ou un semi-ester acrylique ou méthacrylique d'acide phtalique.

6. Utilisation selon la revendication 2, caractérisée en ce que le comonomère (2) dans le copolymère photoréticulable est constitué par une vinylpyridine ou un méthacrylate ou acrylate de N,N-dialkylamino- ou N,N-alkylarylaminoalkyle.

7. Utilisation selon la revendication 2, caractérisée en ce que le comonomère (2) renferme des groupes acides ou basiques.

8. Utilisation selon la revendication 2, caractérisée en ce que le comonomère (3) dans le copolymère photoréticulable est un alcène, un halogènure de vinyle ou de vinylidène, du méthacrylonitrile, des esters ou des amides d'un acide $\alpha,\beta$ insaturé, un composé vinylique aromatique ou hétérocyclique, un ester ou en éther vinylique ou une vinylcétone.

9. Utilisation selon la revendication 2, caractérisée en ce que le comonomère (3) dans le copolymère photoréticulable est un méthacrylate ou acrylate d'alkyle ou d'hydroxyalkyle.

10. Utilisation selon la revendication 1, caractérisée en ce que les comonomères dans le copolymère photoréticulable sont constitués par du méthacrylate de 2-(N-diméthylmaléimide) éthyle et du méthacrylate de N,N-diméthylaminoéthyle, quaternisés avec des quantités atteignant des quantités équimolaires de sulfate de diméthyle.